# EUROPEAN PATENT APPLICATION

(11) **EP 4 696 635 A1**
(43) Date of publication of application: **18.02.2026**
(21) Application number: 25194767.7
(22) Date of filing: 08.08.2025
(51) Int. Cl.: B66B 11/00, B66B 11/04, B66B 11/08, B66B 15/04, H02K 5/00

(54) **RACK FOR MACHINE ROOMLESS ELEVATOR SYSTEM, ELEVATOR LIFTING DRIVE, AND ELEVATOR SYSTEM**

(30) Priority: 16.08.2024 CN 202411128461
(71) Applicant: Otis Elevator Company, Farmington, Connecticut 06032 (US)
(72) Inventor: Zhu, Fengkun, Tianjin, 300457 (CN); Gao, Guochen, Tianjin, 300457 (CN); Wu, Hongliang, Tianjin, 300457 (CN); Liu, Ruguang, Tianjin, 300457 (CN)
(74) Representative: Schmitt-Nilson Schraud Waibel Wohlfrom Patentanwälte Partnerschaft mbB

(57) **Abstract**

A rack for a machine roomless elevator system, an elevator lifting drive, and an elevator system are disclosed. The rack comprises: a base, configured to be fixed to an upper portion within an elevator shaft; a bracket, connected to the base and defining an accommodating space together with the base; and a rotating member, arranged in the accommodating space and rotatably supported on a support portion extending from the base towards the accommodating space, the rotating member having an engagement portion configured to engage a tension member, and rotating after receiving a driving force and driving an elevator traveling device connected to the tension member to travel along the elevator shaft through the tension member. The solutions of the disclosure have the advantages of compact structure, easy installation, stable working performance, safe and reliable use, and low cost.

## Description

The present disclosure relates to the technical field of elevators, in particular to a rack for a machine roomless elevator system, an elevator lifting drive, and an elevator system.

Elevator systems are usually configured with various power devices such as traction machines and winches to provide driving force for system operation. When the rotating device (e.g. elevator sheave, etc.) arranged in the elevator system rotates under the action of driving force, it will drive the elevator car and/or counterweight to travel along the elevator shaft through tension members (such as steel belts, steel wire ropes, etc.) mounted on the rotating device. For example, the elevator car usually moves up and down along the guide rails within the elevator shaft to transport passengers, goods, and other objects to be carried to target landings. The present application has found, after research, that the elevator power devices and related components or equipment in the prior art may still be optimized and improved in terms of structural layout, composition, working performance, manufacturing and usage costs, installation and maintenance operations, and other aspects.

In view of the foregoing, the present disclosure provides a rack for a machine roomless elevator system, an elevator lifting drive, and an elevator system, so as to solve or at least alleviate one or more of the aforementioned problems and other problems in the prior art, or to provide alternative technical solutions for the prior art.

According to one aspect of the present disclosure, a rack for a machine roomless elevator system is first provided, which comprises:
a base configured to be fixed to an upper portion within an elevator shaft;
a bracket connected to the base and defining an accommodating space together with the base; and
a rotating member arranged in the accommodating space and rotatably supported on a support portion extending from the base towards the accommodating space, the rotating member having an engagement portion configured to engage a tension member, and rotating after receiving a driving force and driving an elevator traveling device connected to the tension member to travel along the elevator shaft through the tension member.

Particular embodiments further may include at least one, or a plurality of, the following optional features, alone or in combination with each other:

In a rack for a machine roomless elevator system according to the disclosure, optionally, the rotating member is rotatably supported on the support portion through a first bearing on a first side, and the rotating member is rotatably supported on the bracket through a second bearing on a second side opposite to the first side.

In a rack for a machine roomless elevator system according to the disclosure, optionally, the rotating member is provided with a concave portion on the first side, the first bearing is arranged in the concave portion and an outer ring of the first bearing abuts against an inner surface of the concave portion, and the support portion extends into the concave portion and abuts against an inner ring of the first bearing.

In a rack for a machine roomless elevator system according to the disclosure, optionally, the rack is provided with an opening and the second bearing is arranged in the opening, the rotating member is provided with a shaft on the second side and the shaft extends into the opening and an outer surface of the shaft abuts against an inner ring of the second bearing, and an outer ring of the second bearing abuts against an outer surface of the opening.

In a rack for a machine roomless elevator system according to the disclosure, optionally, the shaft is connected to a position reference device in the machine roomless elevator system, and the position reference device is arranged on an outer side of the bracket and configured to provide a position signal relating to a position of the elevator traveling device within the elevator shaft.

In a rack for a machine roomless elevator system according to the disclosure, optionally, the rack further comprises a positioning member configured to define the first bearing and/or the second bearing in a preset position in the rack.

In a rack for a machine roomless elevator system according to the disclosure, optionally, the engagement portion is configured such that its projection on a horizontal plane of the elevator shaft overlaps at least partially with a projection of the support portion on the horizontal plane, and/or the engagement portion is provided with a liner and the tension member is sleeved on the liner.

In a rack for a machine roomless elevator system according to the disclosure, optionally, the liner is integrally formed and sleeved onto the engagement portion, or the liner is configured to include two or more combinable portions configured to be combined and sleeved onto the engagement portion.

In a rack for a machine roomless elevator system according to the disclosure, optionally, a seam between two adjacent combinable portions of the combinable portions are configured in the shape of a step, an arc or an oblique line, and an angle formed between the oblique line and a longitudinal section of the rotating member is less than 90 ° and not less than 10 °.

In a rack for a machine roomless elevator system according to the disclosure, optionally, the base comprises a body and one or more connecting portions extending outward from the body, and the bracket is detachably connected to the one or more connecting portions to define the accommodating space.

In a rack for a machine roomless elevator system according to the disclosure, optionally, the rack is provided with a junction box which is provided at least with an electrical connection interface of a driving member for providing the driving force to the rotating member, and/or the elevator traveling device comprises an elevator car and a counterweight, and/or the tension member comprises a steel belt.

Secondly, according to another aspect of the present disclosure, an elevator lifting drive is also provided, which comprises:
a rack for a machine roomless elevator system according to any of the above; and
a driving member arranged on the bracket for providing the driving force to the rotating member.

Particular embodiments further may include at least one, or a plurality of, the following optional features, alone or in combination with each other:

In the elevator lifting drive according to the disclosure, optionally, the driving member comprises one or more motors, and after the driving member is mounted in position with the rotating member, a rotor of the motor is engaged with the rotating member.

In the elevator lifting drive according to the disclosure, optionally, the elevator lifting drive further comprises a brake connected to the base and/or the bracket and configured to slow down or stop the elevator traveling device by limiting rotation of the rotating member, the brake comprising one or more clipper brakes.

In addition, according to yet another aspect of the present disclosure, an elevator system is further provided, which comprises:
an elevator traveling device configured to travel along an elevator shaft under an action of a driving force;
a tension member connected to the elevator traveling device to transmit the driving force thereto; and
an elevator lifting drive according to any of the above, wherein the tension member is engaged with the engagement portion of the rotating member in the elevator lifting drive.

Particular embodiments further may include at least one, or a plurality of, the following optional features, alone or in combination with each other:

The rack and the elevator lifting drive according to the disclosure have many advantages such as compact structure, easy installation, stable working performance, safe and reliable use, and low cost. The adoption of the solutions according to the disclosure can not only significantly reduce equipment volume and installation space, but also provide favorable conditions for the overall spatial layout of the elevator system. In particular, considerable saving can be made in equipment manufacturing costs and the safety performance of elevator systems can be effectively improved.

The technical solutions of the present disclosure will be described in further detail below with reference to the accompanying drawings and embodiments. However, it should be understood that these drawings are designed merely for the purpose of explanation and only intended to conceptually illustrate the structures and configurations described herein, and are not required to be drawn to scale.
FIG. 1 is a three-dimensional structural schematic diagram of an example of an elevator system that may adopt the embodiments of the elevator lifting drive and the embodiments of the rack according to the disclosure.
FIG. 2 is a three-dimensional structural schematic diagram of an embodiment of an elevator lifting drive according to the disclosure after assembly.
FIG. 3 is a lateral sectional structural schematic diagram of an embodiment of the rack according to the disclosure that may be configured and used in the embodiment of the elevator lifting drive shown in FIG. 2, wherein a driving member, a position reference device and the like are also shown.
FIG. 4 and FIG. 3 show, in comparison, lateral sectional structural schematic diagrams of another rack product that may be configured and used in an elevator system, wherein a driving member, an encoder and the like are also shown.
FIG. 5 is a three-dimensional decomposition structural schematic diagram of the embodiment of the elevator lifting drive shown in FIG. 2.
FIG. 6 is a lateral sectional structural schematic diagram of an embodiment of the elevator lifting drive shown in FIG. 2.
FIG. 7 shows the respective local top-view structural schematic diagrams in which four different embodiments of a liner are respectively mounted onto the engagement portion of the rotating member in the embodiment of the elevator lifting drive.

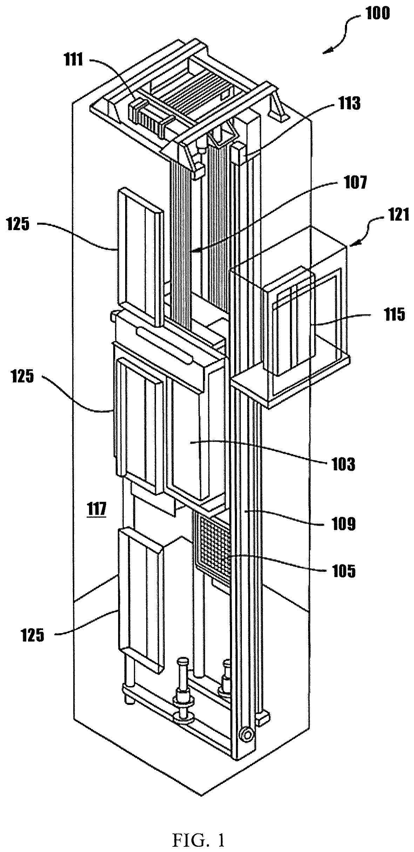

FIG. 1 is a perspective view of an elevator system 100 including an elevator car 103, a counterweight 105, a tension member 107, a guide rail (or rail system) 109, a machine (or machine system) 111, a position reference device 113, and an electronic elevator controller (controller) 115. The elevator car 103 and counterweight 105 can be collectively referred to as elevator traveling devices, which can be connected to each other by tension members 107 and travel along an elevator shaft 127 under driving force. The tension member 107 may include or be configured as, for example, steel belts (e.g. coated-steel belts) and/or ropes (e.g. steel cables). The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111. The machine 111 is configured to control movement between the elevator car 103 and the counterweight 105. The machine 111 may include a motor or similar driving mechanism to provide driving force to elevator system 100. The elevator lifting drive 30 discussed below may be used as machine 111 or a part thereof to provide power for system operation, achieving a machine roomless configuration at this point. The position reference device 113 may be mounted, for example, on a moving member of the unit 111, or arranged in other positions and/or configurations known in the art, such as on a fixed part at the top of the elevator shaft 117, such as on a support rod or guide rail. The position reference device 113 can be configured to provide position signals related to a position of the elevator traveling device within the elevator shaft, and may employ any device or mechanism for monitoring a position of an elevator car and/or counterweight, as known in the art, such as but not limited to an encoder, sensor, or other components, and may include velocity sensing, absolute position sensing, and the like.

The controller 115 is located in a controller room 121 of the elevator shaft 117 and is configured to control the operation of the elevator system 100, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference device 113 or any other desired device or system of this kind. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 100, such as located remotely or in the cloud.

Although specific elevators and components are shown and described herein, FIG.1 is merely a non-limiting example presented for illustrative and explanatory purposes. It should be noted that other elevator systems can be configured to use the elevator lifting drive and rack disclosed herein. Additionally, for the sake of simplification, identical or similar components and features may only be indicated in one or several locations within the same drawing. Technical terms such as "first" and "second" are only used for the purpose of distinguishing and are not intended to indicate the order and relative importance thereof. The technical term "connect" (or "engage") means the realization of connection (or engagement) in a direct or an indirect manner.

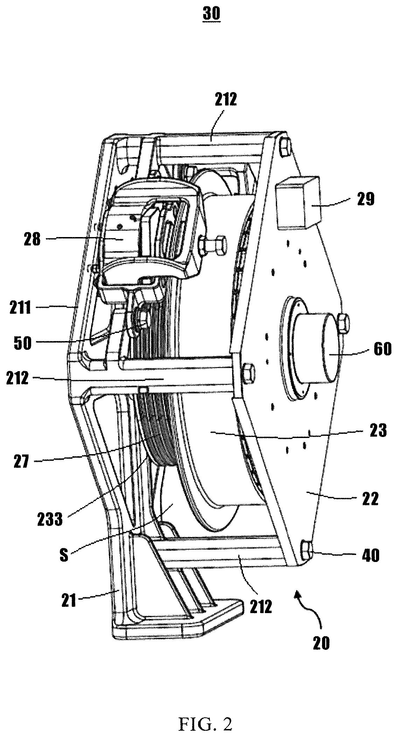

Referring to FIGS. 2, 3, 5, 6 and other figures, the elevator lifting drive 30 can be configured with a rack 20. The rack 20 can be designed, manufactured and sold, independently. When in use, the rack 20 may be integrated with driving member 24 to form the elevator lifting drive 30. According to actual requirements, the rack 20 may be arranged at any suitable position located at the upper portion of the elevator shaft 127, such as mounted on the inner wall, guide rail or crossbeam of the shaft. As used herein, in various embodiments, the rack 20 may include a base 21, a bracket 22, and a rotating member 23, which can be selected to use the same or different materials as needed, such as steel, iron, metal alloys, etc., and allow for the use of any one or more suitable processes such as casting, stamping, welding, and the like.

The base 21 can be designed to have a suitable shape that meets the specific application requirements, such as using hollow, frame, or reinforced rib structures to save materials, reduce weight, increase rigidity, and the like. Feasible means such as bolt connection, welding, etc. may be used to fix the base 21 in place in the desired mounting position, and then the bracket 22 may be connected to the base 21 to define the accommodating space S. As an example, as shown in FIGS. 2, 5, and 6, the base 21 may have a body 211 and connecting portions 212 extending outward from the body 211. One or more connecting portions 212 may be provided as needed, and connecting pieces 40 such as screws and bolts may be optionally used to securely connect the bracket 22 and the connecting portions 212 together in a detachable manner, thereby defining the aforementioned accommodating space S for accommodating various components that may be configured, such as the rotating member 23, the positioning member 26, and the like.

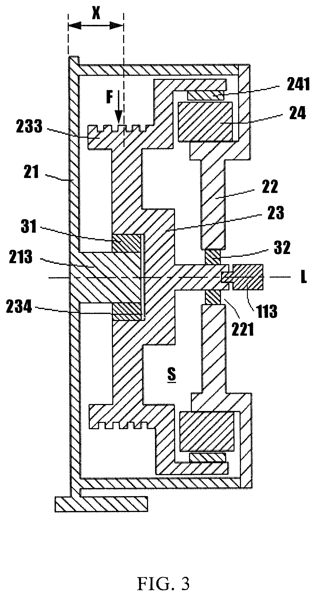

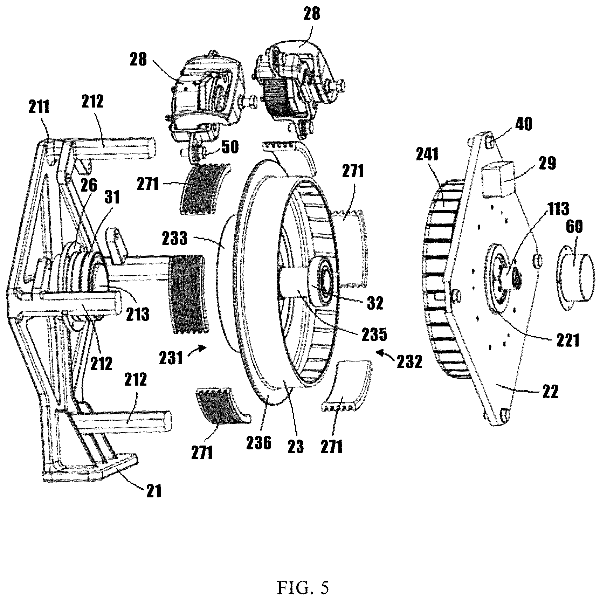

In the rack 20, the rotating member 23 is rotatably supported on the base 21. More specifically, as shown in FIG. 3, it can be supported on the support portion 213 of the base 21. The support portion 213 extends towards the accommodating space S and may be constructed in an axial shape. As shown in FIG. 5, the rotating member 23 may have a first side 231 and a second side 232 that are opposite to each other, and it can rotate about the rotation axis L (FIG. 3) when driven by power.

The tension member 107 may be engaged with the rotating member 23 through the engagement portion 233 provided on the rotating member 23, so that after the rotating member 23 is driven to rotate, it can drive the tension member 107 to move, and then drive the elevator car 103 and counterweight 105 to move along the elevator shaft 127 through the tension member 107. Optionally, a liner 27 may be provided between the engagement portion 233 and the tension member 107, which can increase friction, reduce component wear, alleviate vibration, and prolong lifespan. This will be described further later.

As used herein, in various embodiments, a concave portion 234 may be provided on the first side 231 of the rotating member 23, and the support portion 213 may enter the concave portion 234 after the rack is mounted. The bearing 31 can be mounted in the concave portion 234 to support the rotating member 23. At this point, the inner and outer rings of the bearing 31 can abut against the outer surface of the support portion 213 and the inner surface of the concave portion 234, respectively, thereby providing support for the rotating member 23.

In addition, as an optional scenario, the rotating member 23 may also be rotatably supported on the bracket 22 on the second side 232, for example, through a bearing 32. For example, an opening 221 may be provided on the bracket 22 and the bearing 32 may be arranged therein. The rotating member 23 can extend into the opening 221 through a shaft 235 provided on the second side 232. At this point, the inner and outer rings of the bearing 32 can abut against the outer surface of the shaft 235 and the outer surface of the opening 221, respectively, thereby providing support for the rotating member 23.

When in use, one or more positioning members may be arranged at appropriate positions in the rack 20 to define the position of the bearing 31 and/or the bearing 32. For example, a generally circular positioning member may be arranged on the support portion 213 to define the bearing 31 in a preset position relative to the base 21. This has been illustrated in FIG. 5 using reference sign 26 for such positioning members that may be used for the bearing 31.

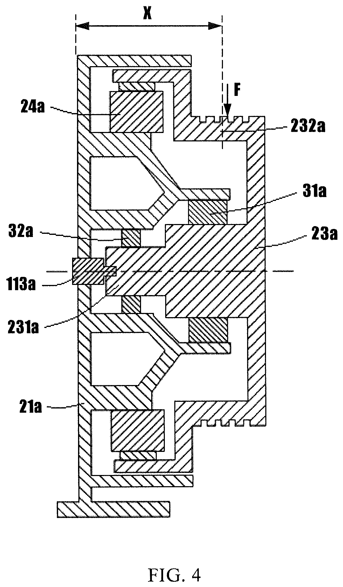

With continued reference to FIG. 3, this figure illustrates, in a simplified and schematic manner, a rough lateral cross-sectional structure of a rack 20. For ease of understanding, both the driving member 24 and the position reference device 113, etc. are shown in this figure. In addition, as a comparative illustration with the example of the rack in FIG. 3, a rough lateral cross-sectional structure of another rack product that may be configured and used in an elevator system is shown in FIG. 4. The rack includes a base 21a and a rotating member 23a. The rotating member 23a is provided with a rotating shaft 231a and is supported on the base 21a through bearings 31a and 32a. The tension member in the elevator system can be engaged with the engagement portion 232a on the rotating member 23a. When the rotating member 23a is driven to rotate by the driving force provided by the driving member 24a, the tension member can drive the elevator car and/or counterweight to travel along the elevator shaft.

In the rack structure shown in FIG. 4, the distance X between the side of the base 21a that can be fixed on the inner wall of the shaft and the middle of the engagement position between the tension member and the engagement portion 232a has a relatively long size, which can reach, for example, 230 mm or more. During the use of the elevator, the tension member bears the weight of the elevator car (the total weight that includes the current object carried) and the counterweight, and apply a force F to the rotating member. Due to the relatively long cantilever beam correspondingly formed by the distance X, the rotating member and the entire rack are subjected to a relatively large torque load (represented by F*X), which tends to cause significant deformation. As a result, various measures such as selecting larger or higher specification bearings for the rack, increasing the shaft size of the rotating member, etc. are generally adopted to ensure the system's performance, especially fatigue life, etc. This not only increases equipment costs and volume, but also makes installation operations inconvenient. And, a relatively large installation space will be occupied within the elevator shaft.

Returning to the example of the rack according to the disclosure shown in FIG. 3, in the rack 20, on the one hand, the support portion 213 of the base 21 may be used to provide support for the rotating member 23 through the bearing 31, and on the other hand, the shaft 235 of the rotating member 23 may be supported by the bracket 22 through the bearing 32. The engagement position between the engagement portion 233 of the rotating member 23 and the tension member 107 is located in the accommodating space S and is relatively closer to the fixed side of the base 21a (such as fixed to the inner wall of the shaft). Therefore, at this point, the distance X between the fixed side of the base 21a and the middle of the engagement position between the tension member and the engagement portion 233 has a significantly smaller size. For example, for the 230 mm size mentioned above, it can be significantly reduced to only 55 mm, which is at most only a quarter of the former, thus significantly reducing the length and torque load of the cantilever beam.

When compared with the rack in FIG. 4 or other existing rack products and meeting the same or even higher requirements for elevator applications, the rack according to the disclosure does not require higher configuration requirements for structural components. For example, compared to the example in FIG. 4, bearings with smaller sizes or specifications can be selected. Therefore, considerable costs for the equipment can be saved, the installation operations become convenient, and the space occupied by the equipment within the elevator shaft is reduced. This also provides favorable conditions for the spatial layout of the elevator system. In addition, when using these bearings, they can be flexibly configured so that the outer or inner rings of the bearings are utilized to make contact with the rotating members, such that the rotating members can better share the torque load with the base, the bracket and other components, facilitating a more balanced force distribution of the entire device structure, thus improving the safety of elevator system operation.

As used herein, in various embodiments, the position reference device 113 (such as an encoder, sensor, etc.) may be connected to the shaft 235 of the rotating member 23, for example, connected to the end of the shaft 235 and arranged on the outer side of the bracket 22, wherein a cover 60 may also be provided. Therefore, compared with the structure shown in FIG. 4, it is more convenient to install, maintain, and collect position signals for the position reference device 113. In the rack structure shown in FIG. 4, the encoder 113a is arranged on the inner side of the entire structure, so it is inconvenient to perform the above operations.

In the elevator lifting drive 30, the driving force can be provided to the rotating member 23 through the driving member 24. As an example, the driving member 24 may adopt one or more motors according to application requirements. For example, the motor rotor 241 may be engaged with the rotating member 23 using a matching structure, such as a concave-convex structure, a toothed structure, and the like. For example, the outer surface of the motor rotor 241 may be engaged with the inner surface of the rotating member 23, so that after the motor is started, the rotating member 23 can be driven to rotate by the rotation of the motor rotor 241, and then the elevator car 103 and counterweight 105 can be driven to move through the tension member 107 engaged with the engagement portion 233.

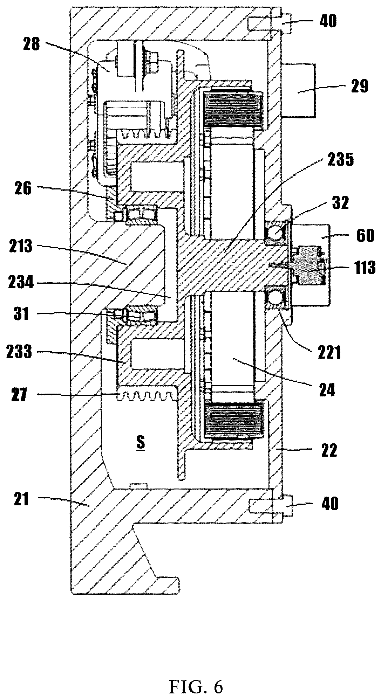

With continued reference to FIGS. 3 and 6, as used herein, in various embodiments, the engagement portion 233 of the rotating member 23 may be configured such that its projection on the horizontal plane of the elevator shaft 127 overlaps at least partially with the projection of the support portion 213 of the base 21 on the horizontal plane. This arrangement is conducive to more fully utilizing the support portion 213 and the bearing 31 to bear the load, thus improving the fatigue life of the equipment.

In addition, as an optional scenario, a liner 27 may be further configured for the engagement portion 233 of the rotating member 23, and then the tension member 107 may be sleeved on the liner 27. The liner may be made of suitable materials that meet the application requirements, such as rubber materials with wear resistance and shock absorption properties. In one or some embodiments, the liner 27 may be integrally formed (e.g. using injection technology, etc.), and then mounted as a whole onto the engagement portion 233 of the rotating member 23. The engagement portion 233 may have one or more grooves to accommodate and mount the tension member 107. In another or some embodiments, the liner 27 may be configured as needed to comprise two or more combinable portions 271, and then these combinable portions 271 may be assembled and mounted onto the engagement portion 233 of the rotating member 23 during use. In this way, in the case where one or a portion of the combinable portions 271 in the liner 27 is/are worn out and cannot work properly, the damaged combinable portion(s) 271 can be repaired or directly replaced. This not only operates efficiently and effectively saves costs, but also helps to ensure the service life of components such as the tension members, thus enhancing the safety performance of the elevator system.

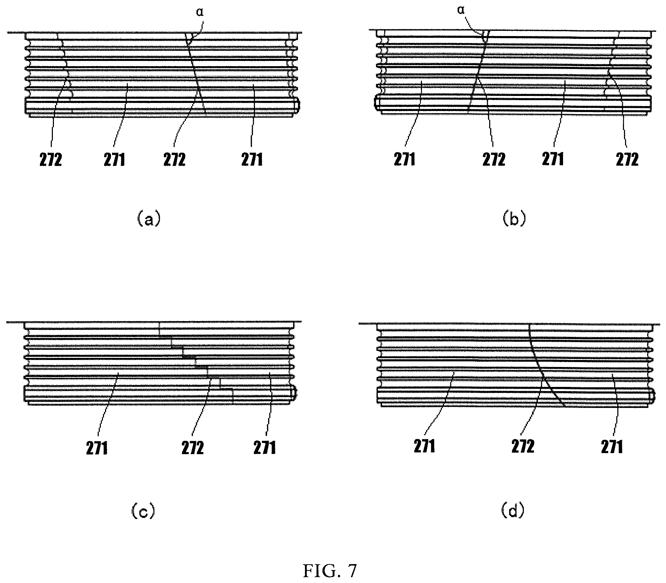

It should be appreciated that the disclosure allows for flexible configurations of the specific number of combinable portions 271 in the liner 27, the configuration settings of individual combinable portions, and the matching settings between various combinable portions according to actual application requirements, where no restrictions are made in this regard. For example, these combinable portions 271 in the liner 27 may have configurations that are the same or different from each other in terms of circumferential length, edge contour, material, color selection, and so on. For example, referring to the various exemplary embodiments shown in FIG. 7, the seam 272 of two assembled adjacent combinable portions 271 of the liner 27 may be configured into any suitable shape as needed. For example, in FIG. 7, seam configurations such as oblique line shape, stepped shape, and circular arc shape are shown, respectively. FIGS. 7(a) and 7(b) also show that such oblique lines may have different tilt directions relative to the rotation axis L of the rotating member 23. For example, the oblique line may be configured to form an angle α relative to the longitudinal section of the rotating member 23, wherein the angle α is greater than or equal to 10° and less than 90°. In the case where the seam 272 between two adjacent combinable portions 271 has a seam configuration that is not parallel to the rotation axis L of the rotating member 23, this will result in a contact time difference between the tension member 107 and different seam parts, thereby effectively reducing or avoiding adverse effects such as vibration and noise that may be caused by the tension member 107 when coming into contact with the seam 272.

A brake 28 may be configured in the elevator lifting drive 30. For example, the brake 28 may be mounted on the base 21 and/or bracket 22, so as to be used to brake the elevator traveling device when needed. For example, the brake 28 may limit the rotational motion of the rotating member 23 to achieve the purpose of slowing down or stopping the movement of the elevator car 103 and/or counterweight 105. Those skilled in the art should appreciate that the brake 28 can adopt any feasible device or mechanism that can achieve the above functions. As an example, as shown in FIGS. 2, 5, and 6, one, two, or more clipper brakes may be configured as needed. They may be arranged along the circumferential direction of the rotating member 23 and may be fixed to the base 21 using connecting pieces 50 such as bolts and screws. When in use, the clipper brakes can press against suitable parts of the rotating member 23, such as the flange 236, to limit the rotation of the rotating member 23. This can slow down or stop the elevator traveling device.

As used herein, in various embodiments, the elevator lifting drive 30 may be configured with one or more junction boxes 29 as needed, which may be arranged on the rack 20 or other suitable positions, such as mounted on the outer side of the bracket 22 for ease of use as shown in FIG. 2. The junction box 29 may be used to accommodate any possible electrical components for the elevator lifting drive, such as the electrical connection interfaces, control switches, cables, etc. of the driving member 24, brake 28, and/or position reference device 113, or may also be used to store any other possible objects such as maintenance tools, spare parts, and so on. This will provide great convenience for the daily maintenance, inspection, and other operations of the elevator system, and is conducive to ensuring the safe operation of the system.

A rack for a machine roomless elevator system, an elevator lifting drive, and an elevator system according to the disclosure have been described above in detail by way of examples only. These examples are merely used to illustrate the principles and embodiments of the present disclosure, rather than limiting the present disclosure. Various modifications and improvements can be made by those skilled in the art without departing from the scope of the disclosure. Therefore, all equivalent technical solutions should fall within the scope of the disclosure and be defined by the claims of the disclosure.

## Claims

1. A rack for a machine roomless elevator system, comprising:
a base configured to be fixed to an upper portion within an elevator shaft;
a bracket connected to the base and defining an accommodating space together with the base; and
a rotating member arranged in the accommodating space and rotatably supported on a support portion extending from the base towards the accommodating space, the rotating member having an engagement portion configured to engage a tension member, and rotating after receiving a driving force and driving an elevator traveling device connected to the tension member to travel along the elevator shaft through the tension member.

2. The rack for a machine roomless elevator system according to claim 1, wherein the rotating member is rotatably supported on the support portion through a first bearing on a first side, and the rotating member is rotatably supported on the bracket through a second bearing on a second side opposite to the first side.

3. The rack for a machine roomless elevator system according to claim 2, wherein the rotating member is provided with a concave portion on the first side, the first bearing is arranged in the concave portion and an outer ring of the first bearing abuts against an inner surface of the concave portion, and the support portion extends into the concave portion and abuts against an inner ring of the first bearing.

4. The rack for a machine roomless elevator system according to claim 2 or 3, wherein the rack is provided with an opening and the second bearing is arranged in the opening, the rotating member is provided with a shaft on the second side and the shaft extends into the opening and an outer surface of the shaft abuts against an inner ring of the second bearing, and an outer ring of the second bearing abuts against an outer surface of the opening.

5. The rack for a machine roomless elevator system according to claim 4, wherein the shaft is connected to a position reference device in the machine roomless elevator system, and the position reference device is arranged on an outer side of the bracket and configured to provide a position signal relating to a position of the elevator traveling device within the elevator shaft.

6. The rack for a machine roomless elevator system according to any of claims 2 to 5, wherein the rack further comprises a positioning member configured to define the first bearing and/or the second bearing in a preset position in the rack.

7. The rack for a machine roomless elevator system according to any of claims 1 to 6, wherein the engagement portion is configured such that its projection on a horizontal plane of the elevator shaft overlaps at least partially with a projection of the support portion on the horizontal plane, and/or the engagement portion is provided with a liner and the tension member is sleeved on the liner.

8. The rack for a machine roomless elevator system according to claim 7, wherein the liner is integrally formed and sleeved onto the engagement portion, or the liner is configured to include two or more combinable portions configured to be combined and sleeved onto the engagement portion.

9. The rack for a machine roomless elevator system according to claim 8, wherein a seam between two adjacent combinable portions of the combinable portions are configured in the shape of a step, an arc or an oblique line, and an angle formed between the oblique line and a longitudinal section of the rotating member is less than 90 ° and not less than 10 °.

10. The rack for a machine roomless elevator system according to any of claims 1 to 9, wherein the base comprises a body and one or more connecting portions extending outward from the body, and the bracket is detachably connected to the one or more connecting portions to define the accommodating space.

11. The rack for a machine roomless elevator system according to any of claims 1 to 10, wherein the rack is provided with a junction box which is provided at least with an electrical connection interface of a driving member for providing the driving force to the rotating member, and/or the elevator traveling device comprises an elevator car and a counterweight, and/or the tension member comprises a steel belt.

12. An elevator lifting drive, comprising:
a rack for a machine roomless elevator system according to any of claims 1 to 11; and
a driving member arranged on the bracket for providing the driving force to the rotating member.

13. The elevator lifting drive according to claim 12, wherein the driving member comprises one or more motors, and after the driving member is mounted in position with the rotating member, a rotor of the motor is engaged with the rotating member.

14. The elevator lifting drive according to claim 12 or 13, wherein the elevator lifting drive further comprises a brake connected to the base and/or the bracket and configured to slow down or stop the elevator traveling device by limiting rotation of the rotating member, the brake comprising one or more clipper brakes.

15. An elevator system, comprising:
an elevator traveling device configured to travel along an elevator shaft under an action of a driving force;
a tension member connected to the elevator traveling device to transmit the driving force thereto; and
an elevator lifting drive according to any of claims 12 to 14, wherein the tension member is engaged with the engagement portion of the rotating member in the elevator lifting drive.
